# EUROPEAN PATENT APPLICATION

(11) **EP 1 489 151 A1**
(43) Date of publication of application: **22.12.2004**
(21) Application number: 04253642.5
(22) Date of filing: 17.06.2004
(51) Int. Cl.: C09D 11/02, B05D 5/06, C09C 1/00, C09D 5/36

(54) **Coating composition and methods of using the same**

(30) Priority: 18.06.2003 GB 0314158
(71) Applicant: De La Rue International Limited, Basingstoke, Hampshire RG22 4BS (GB)
(72) Inventor: Sugdon, Matthew Charles, Basingstoke Hampshire RG24 7BQ (GB)
(74) Representative: Hucker, Charlotte Jane

(57) **Abstract**

A coating composition comprises, dispersed in an ink vehicle, an iridescent pigment having a first iridescent reflection colour and a second iridescent reflection colour observed at a shallower angle to the first iridescent reflection colour, a black non-iridescent pigment or a mixture of non-iridescent pigments which together form black, and a coloured non-iridescent pigment which possesses an absorption band which at least partially overlaps a reflection band of the first iridescent reflection colour and a reflection band which at least partially overlaps a reflection band of the second iridescent reflection colour.

## Description

### Field of the Invention

The present invention relates to coating compositions comprising iridescent pigments, and the use of such compositions, in particular in security printing.

### Background to the Invention

Iridescent pigments comprise a core material or substrate which is a lamellar or flake material, for example mica, alumina, silica or glass, which is coated with at least one layer of a material which has a different refractive index to the core material. The book "Special Effect Pigments" by Ralf Glausch *et al* describes the production and optical properties of such pigments.

Multilayer iridescent pigments are also known, in which the flake core is coated with alternating layers of high and low refractive index materials. Such pigments show iridescent reflection colours (caused by optical interference) when viewed at at least two different viewing angles. For instance, one colour may be observed at around 45° to the normal, and is typically termed the "face" colour, whereas a second colour is observed at around 60° to the normal, ie. a shallower angle from the surface of a substrate, and is often termed the "flop" colour.

Iridescent pigments have been incorporated into a variety of coating compositions, including inks. However, if a coating composition containing an iridescent pigment is applied to a light coloured background the iridescent effect is not clearly observed. It is known that this problem may be overcome by applying the coating composition containing an iridescent pigment over a dark background, as the dark background absorbs non-reflected incident light and the transmitted light is complementary to the reflected light colours. It is also known that the iridescent effect may be enhanced by adding a black pigment directly into the coating composition.

Other methods of enhancing the iridescent colours of iridescent pigments are known in the prior art. For example, US-A-4017326 describes a method by which the iridescent colour is enhanced by the addition of a non-iridescent, coloured pigment. The coloured pigment is chosen such that the visible colour of the pigment absorbs the complementary colour to the light reflected by the iridescent pigment. For instance, an iridescent pigment reflecting red light (and absorbing blue and yellow light) would be used with a red, non-iridescent pigment which acts to absorb all blue and yellow light transmitted through the iridescent pigment.

US-A-6517628 describes a similar method for intensifying the colour flop effect of multilayer iridescent pigments, by the addition to those pigments of platelet-shaped, acicular or spherical colorants and/or fillers.

While multilayer iridescent pigments exhibit interesting optical effects, in some cases these effects are not optimum for security printing. For instance, the contrast between the different iridescent reflection colours may not be sufficient to provide the requisite degree of security, or to provide the desired design feature. Alternatively, one of the iridescent reflection colours may not be readily be observable. Intensifying one of the iridescent reflection colours, for instance as described in US-A-4017326 and US-A-6517628, does not solve these problems.

### Summary of the Invention

According to a first aspect of the present invention, a coating composition comprises, dispersed in a vehicle, an iridescent pigment having a first iridescent reflection colour and a second iridescent reflection colour observed at a shallower angle to the first iridescent reflection colour, a black non-iridescent pigment or a mixture of non-iridescent pigments which mixed together form black, and a coloured non-iridescent pigment which possesses an absorption band which at least partially overlaps a reflection band of the first iridescent reflection colour and a reflection band which at least partially overlaps a reflection band of the second iridescent reflection colour.

According to a second aspect of the present invention, a method of altering the iridescent-reflection effects of an iridescent pigment comprises applying to the iridescent pigment a black non-iridescent pigment or a mixture of non-iridescent pigments which together form a black pigment, and a coloured non-iridescent pigment which possesses an absorption band which at least partially overlaps a reflection band of the first iridescent reflection colour and a reflection band which at least partially overlaps a reflection band of the second iridescent reflection colour.

According to a third aspect of the present invention, a method of printing comprises printing on to a substrate an iridescent pigment having a first iridescent reflection colour and a second iridescent reflection colour observed at a shallower angle to the first iridescent reflection colour, a black non-iridescent pigment or a mixture of non-iridescent pigments which together form a black pigment, and a coloured non-iridescent pigment which possesses an absorption band which at least partially overlaps a reflection band of the first iridescent reflection colour and a reflection band which at least partially overlaps a reflection band of the second iridescent reflection colour.

According to a further aspect of the present invention, an article is coated with or printed with a coating composition as described above, or coated by or printed by a method as described above.

Through the choice of appropriate coloured non-iridescent pigments, as described above, it is possible to change the colour reflected at the shallower angle, or colour flop, and to add an extra colour shift. For instance, in the context of an iridescent pigment which reflects two colours at different viewing angles, addition of an appropriate coloured pigment increases the number of colours that may be observed from two to three, the new colour being reflected at the shallowest angle, as judged from the surface of the substrate. The coloured pigment may also be selected to maximise the colour difference between light reflected from the steeper angle (or face colour) and that of the shallower angle (or flop).

The present invention finds particular application in the field of printing security documents, for instance banknotes, where the colour shifting effects achieved provide enhanced security from counterfeiting and add to the aesthetic qualities of the documents.

### Detailed Description of the Invention

The iridescent pigments with which the invention is concerned:exhibit at least two distinct reflection colours at different angles. In the context of this Application, reference to a steep or shallow viewing angle describes the angle defined between the line of view and the substrate on to which the coating composition has been applied. Typically, the iridescent pigments are multilayer pigments, for instance of the type described in US-A-6517628.

When formulated as a coating composition, the iridescent pigment is combined with a black pigment or "black equivalent" pigment, by which we mean mixtures of pigments which produce a similar effect to a black pigment, for instance a mixture of cyan, magenta and yellow pigments. In the following, when reference is made to a black pigment this should be taken to include such mixtures.

In addition to the black pigment, the coating composition comprises a coloured pigment which possesses an absorption band which at least partially overlaps a reflection band of the first iridescent reflection colour and a reflection band which at least partially overlaps a reflection band of the second iridescent reflection colour. Typically, the coloured pigment is highly absorbing in a first region of the electromagnetic spectrum where the first iridescent reflection colour is highly reflecting, and is also highly reflecting in a second region of the electromagnetic spectrum where the second iridescent reflection colour is highly reflecting. In the context of this Application, by a region of the spectrum in which a pigment is "highly absorbing" or "highly reflecting", typically we mean a region of the spectrum in which the maximum absorption or maximum reflection, respectively, is observed. In some cases this region may comprise a distinct peak, but in others it may comprise a shallower plateau, and the required overlap may be towards the extremities of the peak or the plateau, respectively.

When the present invention is applied to an iridescent pigment showing two distinct iridescent colours when coated on a substrate, viewing of the coated substrate in an environment with controlled lighting, such as in a light cabinet, allows observation of three discrete colours: an iridescent colour seen close to the normal, an iridescent colour seen at a shallower viewing angle, and a non-iridescent colour at an even shallower viewing angle, due to the coloured absorbing pigment. Under typical indoor lighting conditions an iridescent colour is seen close to the normal, and at shallower angles a second iridescent colour is seen which is due to the additive colour mixing of the second iridescent colour and the absorbing pigment.

For instance, when using an iridescent pigment exhibiting a red face colour and a gold (or yellow) flop colour, a black pigment and a green pigment may be used. Green and yellow lie next to each other in the spectrum, so the gold (or yellow) iridescence is modified by the overlap of the green, with the result that three reflected colours are observed: red, gold and green, from close to the normal to increasingly shallow viewing angles.

To further illustrate the desirable absorption/reflection characteristics of the coloured non-iridescent pigment, reference is now made to the accompanying drawings.

Figure 1 is an illustrative (rather than actual) reflection spectrum of the above-described red/gold iridescent pigment to which a green non-iridescent pigment has been added.

Figure 2 is an illustrative (rather than actual) reflection spectrum of the same red/gold iridescent pigment to which a blue non-iridescent pigment has been added.

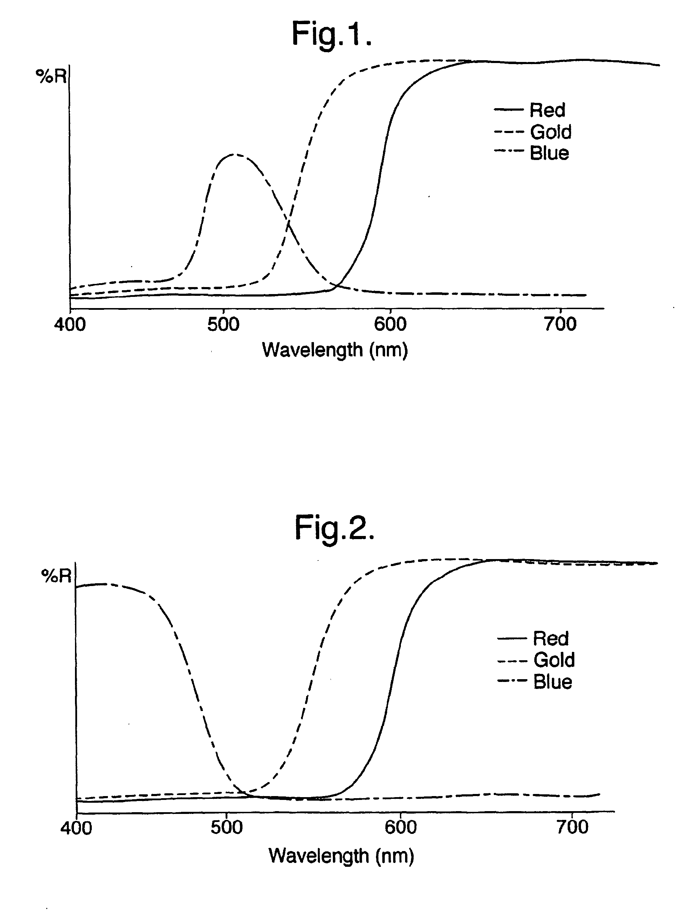

With reference to Figure 1, the green pigment shows little reflection, and is therefore absorbing, in the region of the spectrum in which the red (or first) iridescent reflection colour has a reflection band. Furthermore, the green pigment has a reflection band which partially overlaps a reflection band of the gold (or second) iridescent reflection colour. The result is the above-described three-colour shift, ie. from red to gold to green. ,

With reference to Figure 2, while the blue non-iridescent pigment shows little reflection, and is therefore absorbing, in the region of the spectrum in which the red (or first) iridescent reflection colour has a reflection band, the reflection band of the blue pigment does not overlap the reflection band of the gold (or second) iridescent reflection colour. In other words, only one of the desired absorption/reflection criteria is met, with the result that a three-colour shift is not observed.

Where several pigments have reflection spectra that overlap the iridescent reflection spectrum at the shallower angle, it is preferred that a pigment is selected such that it enhances the difference in colour between the first iridescent colour reflected at the steeper angle and the second iridescent colour reflected at the shallower angle.

The coloured pigment may be selected from opaque, semi-opaque and transparent pigments.

Furthermore, as for the black pigment, a mixture of coloured pigments may be used rather than a single coloured pigment, provided that the absorption and reflection spectra of the resulting mixture meet the above absorption and reflection criteria.

Where a mixture of pigments is used either to provide the black pigment or the coloured pigment it is possible that the same colour components may be present in both mixtures, or that the coloured pigment used is also present as part of the black equivalent pigment. However, in these cases, the proportions of the components of the mixture will be such that the overall effect is one of having present a black pigment and a coloured pigment or combination of coloured pigments which satisfy the above absorption and reflection criteria.

The concentration of each of the iridescent, black and coloured pigments varies according to the type of iridescent pigment and the thickness to which the coating composition is to be applied, and therefore the coating or printing technique to be used. Suitable concentrations may be determined experimentally. However, it is important to realise that if too much black pigment or coloured pigment is added this may overpower one or more of the iridescent reflections. For instance, if too much black pigment is added, on coating some of the black pigment may lie above the iridescent pigment and act to filter out both incident light and some light which has undergone interference in the iridescent pigment. As a result the iridescent effect may be weakened and/or a very dirty grey colour may be obtained, which is undesirable from an aesthetic viewpoint, particularly in printing banknotes.

Typically, the amount of iridescent pigment used will be in the range 15 to 40 weight % of the total weight of the coating composition, preferably 20 to 35 weight %. Typically, the amount of black pigment included in the coating composition is in the range 0.02 to 2 weight %, preferably 0.06 to 1.5 weight %, more preferably in the range 0.08 to 1 weight %, and most preferably in the range 0.1 to 0.7 weight % of the total weight of the coating composition. Typically, the amount of each coloured pigment is in the range 0.02 to 2 weight %, preferably in the range 0.04 to 1 weight %, more preferably in the range 0.08 to 0.8 weight %, and most preferably in the range 0.1 to 0.7 weight % of the total weight of the coating composition.

The coating composition may be formulated as an ink. In this case, the various different pigments will be dispersed in an ink vehicle selected according to the technique by which the ink is to be printed. Preferably, the ink will be printed by an intaglio or a screen technique, and vehicles for use in both these methods are well known in the art. The ink may also comprise a variety of additives of the type conventionally used in inks.

When the ink is for intaglio printing it will typically be printed to a thickness of 5 to 150 µm, and when the ink is for screen printing it will typically be printed to a thickness of 5 to 150 µm.

If the ink is for printing by intaglio it may also comprise solvent in addition to any solvent included in the ink vehicle, which will be referred to as "added solvent" in this Application. The presence of added solvent may be desirable in certain instances to allow the iridescent pigment to orientate in a favourable manner prior to drying of the coating formulation. In this case, suitable amounts of added solvent lie in the range 0.1 to 5 weight % of the coating composition.

The coating composition of the present invention is prepared by mixing the different components into a dispersing vehicle. Typically, the coloured and black pigments will be milled into the vehicle, however the iridescent pigment preferably should not be milled as this may destroy its lamellar structure which is essential for producing the iridescent effects. Accordingly, the iridescent pigment may be incorporated into the vehicle by mixing.

An alternative to formulating the iridescent pigment, black pigment and coloured pigment as a coating composition is to apply the iridescent pigment to a substrate separately from the black pigment and/or the coloured pigment. For instance, it may be desirable to coat the black pigment and/or coloured pigment on to the substrate and then coat the iridescent pigment on top thereof. Although, ultimately it is preferred to coat all components at the same time in a single coating composition, thereby avoiding the need for multiple coating or printing steps, which limits design possibilities and may create difficulties in registration, and which tends to be expensive.

Another option is to coat the iridescent pigment and the coloured pigment, preferably together, on to a black or other dark substrate.

Another advantage of the present invention is that a single multilayer iridescent pigment may be tinted to a number of different shades, providing a series of coating compositions or inks which may be used to print a number of different denominations of a particular currency.

The present invention is further illustrated by the following examples.

### Examples

### Example 1

An intaglio ink was formulated to the following composition by milling the following black and coloured non-iridescent pigments into an ink vehicle using a triple roll mill. The iridescent pigment was then incorporated into the ink vehicle.

| | |
|---|---|
| Colorcrypt® Red/Gold Pigment | 250 g |
| Alkyd modified rosin ester | 736.75 g |
| Cobalt/Manganese driers | 10 g |
| CI Pigment Black 6 | 1.25 g |
| CI Pigment Blue 15:3 | 1 g |
| CI Pigment Yellow 13 | 1 g |

### Example 2

A screen printing ink was formulated to the following composition. The black and coloured pigments were incorporated into the ink vehicle using a bead mill, and the iridescent pigment was then incorporated by high speed mixing.

| | |
|---|---|
| Colorcrypt® Red/Gold Pigment | 250 g |
| UV curing acrylate varnish | 736.75 g |
| Cobalt/Manganese driers | 10 g |
| CI Pigment Black 6 | 1.25 g |
| CI Pigment Blue 15:3 | 1 g |
| CI Pigment Yellow 13 | 1 g |

The ink compositions described in Examples 1 and 2 were then printed onto white banknote paper, the composition of Example 1 by intaglio printing and the composition of Example 2 by screen printing. The printed notes were then viewed in a light cabinet, at different angles.

Each of the compositions appeared red when viewed close to the normal, gold at shallower angles, and green at the shallowest viewing angles. In other words, the colour-shifting effects of the red/gold iridescent pigment have been modified to achieve a red/gold/green colour shift.

## Claims

1. A coating composition comprising, dispersed in an ink vehicle,
an iridescent pigment having a first iridescent reflection colour and a second iridescent reflection colour observed at a shallower angle to the first iridescent reflection colour,
a black non-iridescent pigment or a mixture of non-iridescent pigments which together form black, and
a coloured non-iridescent pigment which possesses an absorption band which at least partially overlaps a reflection band of the first iridescent reflection colour and a reflection band which at least partially overlaps a reflection band of the second iridescent reflection colour.

2. A coating composition according to claim 1, wherein the non-iridescent pigment is highly absorbing in a first region of the spectrum where the first iridescent colour is highly reflecting, and is highly reflecting in a second region of the spectrum where the second iridescent colour is highly reflecting.

3. A coating composition according to claim 1 or claim 2, wherein the iridescent pigment comprises a multilayer pigment comprising a lamellar or flaky substrate coated with alternating layers of high and low refractive index materials.

4. A coating composition according to any preceding claim, wherein the amount of iridescent pigment is in the range 15 to 40 weight % of the coating composition.

5. A coating composition according to any preceding claim, wherein the amount of black pigment is in the range 0.1 to 2 weight % of the coating composition.

6. A coating composition according to any preceding claim, wherein the amount of the or each coloured pigment is in the range 0.1 to 2 weight % of the coating composition.

7. A coating composition according to claim 1, wherein the first iridescent reflection colour is red, the second iridescent reflection colour is yellow or gold, and the coloured non-iridescent pigment is green or a mixture of pigments which together form green.

8. A method of altering the iridescent reflection effects of an iridescent pigment having a first iridescent reflection colour and a second iridescent reflection colour observed at a shallower angle to the first iridescent reflection colour, the method comprising applying to the iridescent pigment
a black non-iridescent pigment or a mixture of non-iridescent pigments which in combination form a black pigment, and
a coloured non-iridescent pigment which possesses an absorption band which at least partially overlaps a reflection band of the first iridescent reflection colour and a reflection band which at least partially overlaps a reflection band of the second iridescent reflection colour.

9. A method of printing comprising printing on to a substrate
an iridescent pigment having a first iridescent reflection colour and a second iridescent reflection colour observed at a shallower angle to the first iridescent colour,
a black non-iridescent pigment or a mixture of pigments which in combination form a black pigment, and
a coloured non-iridescent pigment which possesses an absorption band which at least partially overlaps a reflection band of the first iridescent reflection colour and a reflection band which at least partially overlaps a reflection band of the second iridescent reflection colour.

10. A method according to claim 9, wherein the iridescent pigment, the black pigment and the coloured pigment are applied to the substrate simultaneously in the form of an ink.

11. A method according to claim 9, wherein the iridescent pigment is applied to the substrate separately from the black pigment and/or the coloured pigment.

12. A method according to claim 11, wherein the black pigment and the coloured pigment are applied to the substrate and are then over-printed with the iridescent pigment.

13. A method of printing comprising printing on to a black or dark substrate
an iridescent pigment having a first iridescent reflection colour and a second iridescent reflection colour observed at a shallower angle to the first iridescent reflection colour, and
a coloured non-iridescent pigment which possesses an absorption band which at least partially overlaps a reflection band of the first iridescent reflection colour and a reflection band which at least partially overlaps a reflection band of the second iridescent reflection colour.

14. A method according to claim 13, wherein the iridescent pigment and the coloured pigment are applied to the substrate simultaneously in the form of an ink.

15. A method according to any of claims 9 to 14, which uses an intaglio printing technique.

16. A method according to any of claims 9 to 14, which uses a screen printing technique.

17. An article coated or printed with a coating composition as defined in any of claims 1 to 7, or printed by a method as defined in any of claims 9 to 16.

18. An article according to claim 17, which is a security document, eg. a banknote.

19. A set of banknotes comprising a plurality of different denominations, each denomination banknote being coated or printed with a coating composition as defined in any of claims 1 to 6 comprising a different coloured non-iridescent pigment to each other denomination banknote.
